**Europäisches Patentamt**

**European Patent Office**

**Office européen des brevets**

(11) Veröffentlichungsnummer: **0 022 941**
**B1**

# EUROPÄISCHE PATENTSCHRIFT

(45) Veröffentlichungstag der Patentschrift:
**20.07.83**

(51) Int. Cl.³: **F 16 K 47/02**, F 16 K 17/04

(21) Anmeldenummer: **80103627.8**

(22) Anmeldetag: **26.06.80**

(54) **Sicherheitsventil für Gebläse.**

(30) Priorität: **19.07.79 CH 6722/79**

(43) Veröffentlichungstag der Anmeldung:
**28.01.81 Patentblatt 81/4**

(45) Bekanntmachung des Hinweises auf die Patenterteilung:
**20.07.83 Patentblatt 83/29**

(84) Benannte Vertragsstaaten:
**AT BE DE FR GB IT NL SE**

(56) Entgegenhaltungen:
**AT-B-303 474**
**DE-A-2 252 410**
**DE-B-1 114 067**
**FR-A-1 548 675**
**FR-A-2 359 351**
**GB-A-884 558**
**GB-A-991 548**
**GB-A-1 157 495**

(73) Patentinhaber: **Gebrüder Bühler AG, CH-9240 Uzwil (CH)**

(72) Erfinder: **Flatt, Werner, Haggen/Bichwilerstrasse,**
**CH-9242 Oberuzwil (CH)**

(74) Vertreter: **Fillinger, Peter, Dr., Rütistrasse 1a,**
**CH-5400 Baden (CH)**

Sicherheitsventil für Gebläse

Die vorliegende Erfindung bezieht sich auf ein Sicherheitsventil zum Schutz von Gebläsen, insbesondere in Verbindung mit Leitungen und Gefässen, wie pneumatische Förderleitungen und dgl., mit einem Ventilsitz und einen in seiner Bewegung gedämpften Ventilkörper, der durch eine axiale, vorgespannte Schraubenfeder gegen den Ventilsitz gedrückt ist, wobei die Schraubenfeder zwischen einem mit dem Ventilkörper beweglichen und einem ortsfesten Teil verspannt ist und sich axial zur Schraubenfeder ein Hohlkörper erstreckt, der mit einem seiner Enden dicht an einem der Teile befestigt und in radialer Richtung versteift ist, wobei der Innenraum des Hohlkörpers durch einen Luftdurchtritt mit der Umgebungsatmosphäre verbunden ist.

Gebläse zu pneumatischen Leitungen und Gefässen sind oft durch Sicherheitsventile gegen eine Überlastung geschützt. Insbesondere in pneumatischen Förderleitungen ist, unabhängig ob sie mit Unter- oder Überdruck arbeiten, zwischen den Fördergutabscheidevorrichtungen und dem Gebläse oder dem Gebläse und der Förderguteingabestelle ein Sicherheitsventil angebracht. Dieses spricht im Falle einer Verstopfung der Förderleitung an, um die Anlage, insbesondere das Gebläse vor Schäden zu bewahren. Solche Ventile haben den Nachteil, dass sie beim Ansprechen in eine Schwingbewegung treten können, was zu weithin hörbaren Hämmergeräuschen und zu einer Beschädigung des Ventilkörpers bzw. des Ventilsitzes führen kann.

Zur Unterdrückung dieser Erscheinung wurde in der FR-A-1 548 675 ein Sicherheitsventil der eingangs erwähnten Art vorgeschlagen. Dieses hydraulisch gedämpfte Ventil hat den Nachteil, dass es mehrere spanabhebend feinbearbeitete sowie wartungsbedürftige Teile aufweist. Ein weiterer Nachteil besteht darin, dass dieses Sicherheitsventil im wesentlichen nur lotrecht angeordnet werden kann, da in einer horizontalen Lage oder in einer Kopflage die Dämpfungsflüssigkeit auslaufen würde.

Demgegenüber stellt sich die vorliegende Erfindung die Aufgabe, eine Vorrichtung der eingangs erwähnten Art derart zu verbessern, dass sie mit einem Minimum an spanabhebender Feinbearbeitung herstellbar und weitgehend wartungsfrei ist.

Erfindungsgemäss wird diese Aufgabe dadurch gelöst, dass der Hohlkörper einen armierten, in axialer Richtung verformbaren Schlauch aufweist und die Schraubenfeder innerhalb des Schlauches angeordnet ist, dass der Schlauch mit seinem anderen Ende am anderen Teil befestigt ist, und dass der Luftdurchtritt derart dimensioniert ist, dass zwischen dem Innenraum des Schlauches und der Umgebungatmosphäre nur allmählich ein Druckausgleich stattfindet.

Die erfindungsgemässen Sicherheitsventile können als Über- oder Unterdruckventile ausgebildet sein. Im ersten Fall ist vorgesehen, dass der Ventilkörper auf einer ortsfesten Führungsstange axial verschiebbar gelagert und das ortsfeste Teil an der Führungsstange befestigt ist. Im zweiten Fall kann vorgesehen sein, dass der Ventilkörper an einer in einem axialen Verschiebelager gelagerten Führungsstange befestigt ist, welche den beweglichen Teil trägt, wobei der ortsfeste Teil fest mit den Verschiebelager verbunden ist.

Anhand der beiliegenden schematischen Zeichnung wird die Erfindung beispielsweise erläutert. Es zeigen:

Fig. 1 einen Vertikalschnitt durch ein Überdrucksicherheitsventil,

Fig. 2 den Ausschnitt II aus Fig. 1 in vergrösserter Darstellung,

Fig. 3 einen Vertikalschnitt durch ein Unterdrucksicherheitsventil.

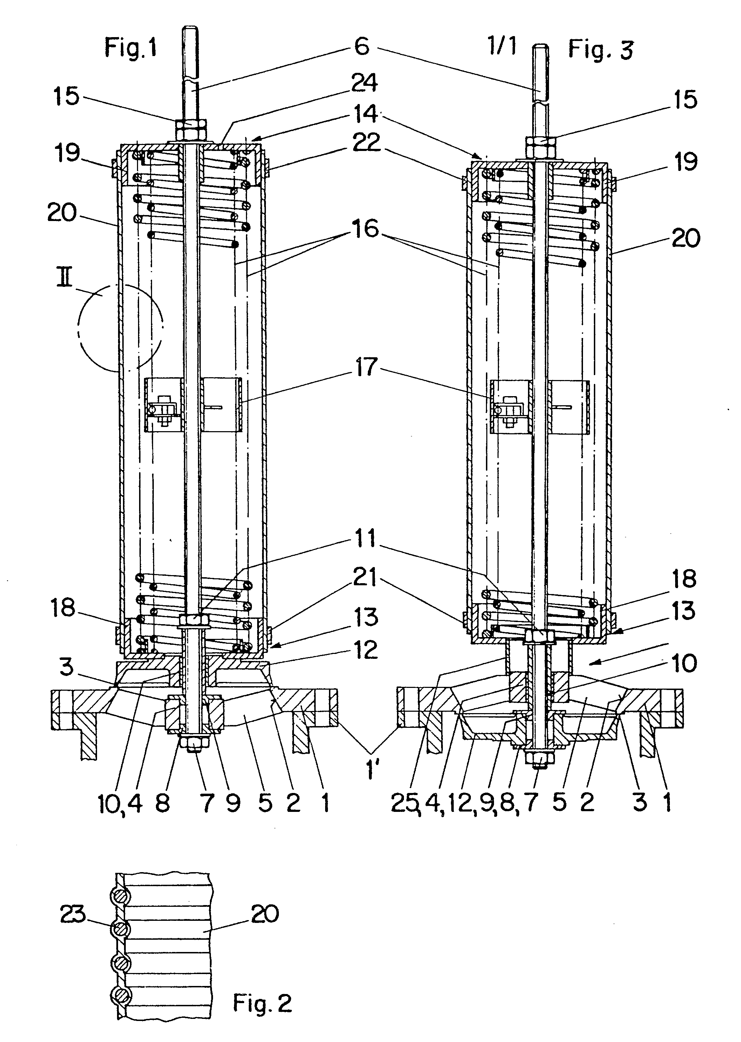

In Fig. 1 bezeichnet die Hinweisziffer 1 eine Verbindungsplatte, die an einer entsprechenden Öffnung einer Förderleitung 1' angeflanscht wird und diese Öffnung abschliesst. Diese Verbindungsplatte 1 weist eine zentrale Öffnung 2 auf, die oben durch einen Ventilsitz 3 begrenzt ist. Der Ventilsitz 3 weist die Form einer nach oben gerichteten Ringrippe auf. Ein Ringlager 4 ist durch radiale Tragarme 5 in der Mitte der Öffnung 2 befestigt. Ein Gewindestab 6 erstreckt sich mit dem unteren Ende axial durch das Ringlager 4, wobei auf das untere Ende eine Mutter 7 aufgeschraubt ist. Die Mutter 7 liegt gegen ein am Ringlager 4 abgestütztes Zentrierstück 8 an, dem ein Zentrierstück 9 gegenüberliegt. An das Zentrierstück 9 schliesst ein axial über den Gewindestab 6 geschobenes Rohrstück 10 an, das mittels einer Mutter 11 gegen das Zentrierstück 9 gespannt ist. Durch das Verspannen der Muttern 7 und 11 entsteht eine feste Verbindung zwischen dem Gewindestab 6 und dem Ringlager 4. Axial auf dem Rohrstück 10 ist ein Ventilkörper 12 verschiebbar gelagert, mit dem ein Teil 13 verbunden ist. Im Bereich seines oberen Endes trägt der Gewindestab 6 ein ortsfestes Teil 14. Seine Lage ist durch die Muttern 15 begrenzt. Zwischen dem beweglichen Teil 13 einerseits und dem ortsfesten Teil 14 anderseits sind axial ineinanderliegende Schraubenfedern 16 auf Druck vorgespannt, welche einerseits den Ventilkörper 12 gegen den Ventilsitz 3 und anderseits das ortsfeste Teil 14 gegen die Muttern 15 drücken. Eine Versteifungseinrichtung 17 verhindert ein Ausknicken der Federn 16. Wird der Ventilkörper 12 von unten durch einen Überdruck beaufschlagt, wird er vom Ventilsitz 3 abgehoben und gleitet auf dem Rohrstück 10 entgegen der Wirkung der Federn 16 nach oben, wobei seine Verschiebebewegung durch die Mutter 11 begrenzt ist. Ist der Überdruck abgebaut, wird er durch die Federn 16 auf den Ventilsitz 3 zurückbewegt.

Sowohl der bewegliche Teil 13 als auch der ortsfeste Teil 14 sind je mit einem Mantel 18 bzw. 19 versehen. Über die Mäntel 18 bzw. 19 sind das untere bzw. obere Ende eines Schlauches 20 geschoben und je mit einer Schlauchbride 21 bzw. 22 befestigt. Der Schlauch 20 ist in axialer Richtung stauch- bzw. dehnbar und in radialer Richtung vergleichsweise steif. Diese Anisotropie der Verformbarkeit kann beispielsweise, wie Fig. 2 zeigt, durch ring- oder spiralförmige Armierungen 23 im Schlauch 20 erreicht werden.

Bei einer axialen Verschiebung des Ventilkörpers 12 verändert sich das Innenvolumen des Schlauches 20. Der dabei auftretende Luftüber- oder Unterschuss wird in der Regel durch Undichtheiten zwischen dem Rohrstück 10 und dem Ventilkörper 12 bzw. dem ortsfesten Teil 14 und dem Gewindestab 6 ausgeglichen. Erforderlichenfalls kann im Teil 14 eine Druckausgleichsöffnung 24 mit Drosselwirkung angeordnet werden. Der Schlauch 20 ist vorzugsweise so gestaltet, dass die in axialer Richtung erforderliche Verformungskraft keine Veränderung der Kennlinien der Federn 16 bewirken.

Beim Unterdrucksicherheitsventil nach Fig. 3 bezeichnen gleiche Hinweisziffern gleiche oder äquivalente Teile wie beim Überdrucksicherheitsventil in Fig. 1. Bei diesem Ausführungsbeispiel ist der Ventilsitz 3 auf der Unterseite der Öffnung 2 angeordnet. Der Ventilkörper 12 ist fest mit der Gewindestange 6 verbunden, wozu er zwischen den Zentrierstücken 8 und 9 durch die Muttern 7 und 11 und das Rohrstück 10 verspannt ist. Das Rohrstück 10 ist axial verschiebbar im Ringlager 4 gelagert. Mit dem Ringlager 4 fest verbunden ist weiter ein Ring 25 an dem das Teil 13 befestigt ist. Bei diesem Ausführungsbeispiel ist das Teil 13 das ortsfeste Teil. Das Teil 14 bildet das bewegliche Teil und ist mit dem Gewindestab 6 axial verschiebbar, wenn sich der Ventilkörper 12 vom Ventilsitz 3 abhebt. Dabei wird gleichzeitig der Schlauch 20 gestaucht. Die Verkleinerung seines Innenvolumens erzeugt einen Überdruck, wobei die Luft allmählich zwischen dem Ringlager 4 und dem Rohrstück 10 abströmt. Ist das Lagerspiel zu gering, kann wie erwähnt, eine Druckausgleichsöffnung vorgesehen werden. Diese Drosselung der Luftab- bzw. -zufuhr aus bzw. zum Innenraum des Schlauches 20 erzeugt eine Dämpfung der Bewegung des Ventilkörpers 12, welche eine Schwingbewegung desselben unterdrückt.

**Patentansprüche**

1. Sicherheitsventil zum Schutz von Gebläsen, insbesondere in Verbindung mit Leitungen und Gefässen, wie pneumatische Förderleitungen und dgl., mit einem Ventilsitz (3) und einem in seiner Bewegung gedämpften Ventilkörper (12), der durch eine axiale, vorgespannte Schraubenfeder (16) gegen den Ventilsitz (3) gedrückt ist, wobei die Schraubenfeder (16) zwischen einem mit dem Ventilkörper (12) beweglichen und einem ortsfesten Teil (13, 14) verspannt ist und sich axial zur Schraubenfeder (16) ein Hohlkörper (20) erstreckt, der mit einem seiner Enden dicht an einem der Teile (13, 14) befestigt und in radialer Richtung versteift ist, wobei der Innenraum des Hohlkörpers (20) durch einen Luftdurchtritt (24) mit der Umgebungsatmosphäre verbunden ist, dadurch gekennzeichnet, dass der Hohlkörper (20) einen armierten, in axialer Richtung verformbaren Schlauch aufweist und die Schraubenfeder (16) innerhalb des Schlauches (20) angeordnet ist, dass der Schlauch (20) mit seinem anderen Ende am anderen Teil (13, 14) befestigt ist, und dass der Luftdurchtritt (24) derart dimensioniert ist, dass zwischen dem Innenraum des Schlauches (20) und der Umgebungsatmosphäre nur allmählich ein Druckausgleich stattfindet.

2. Sicherheitsventil nach Anspruch 1, dadurch gekennzeichnet, dass der Ventilkörper (12) auf einer ortsfesten Führungsstange (6, 10) axial verschiebbar gelagert und das ortsfeste Teil (14) an der Führungsstange befestigt ist.

3. Sicherheitsventil nach Anspruch 1, dadurch gekennzeichnet, dass der Ventilkörper (12) an einer in einem axialen Verschiebelager (4) gelagerten beweglichen Führungsstange (6, 10) befestigt ist, welche das bewegliche Teil (14) trägt, wobei das ortsfeste Teil (13) fest mit dem Verschiebelager (4) verbunden ist.

4. Verwendung eines Sicherheitsventils nach Anspruch 1, dadurch gekennzeichnet, dass es an einer pneumatischen Förderleitung angeordnet ist.

**Claims**

1. Safety valve for protection of blowers, especially in conjunction with conduits and vessels, such as pneumatic lines and the like, with a valve seat (3) and a valving element (12) whose movements are damped and which is biased against the valve seat (3) by a prestressed axial coil spring (16), the coil spring (16) being tensioned between a part which is movable with the valving element (12) and a stationary part (13, 14), one end of a hollow body (20) which extends axially of the coil spring (16) and is stiffened in the radial direction being sealingly secured to one of the parts (13, 14) and the internal space of the hollow body (20) being in communication with the surrounding atmosphere by an air passage (24), characterised in that the hollow body (20) comprises an armored hose which is deformable in the axial direction and the coil spring (16) is disposed within the hose (20), in that the other end of the hose (20) is secured to the other part (13, 14), and by such dimensioning of the air passage (24) that an equalisation of pressure between the internal space of the hose (20) and the surrounding atmosphere takes place only gradually.

2. Safety valve according to Claim 1, characterised in that the valving element (12) is axially shiftably mounted on a stationary guide rod (6, 10) and in that the stationary part (14) is secured to the guide rod.

3. Safety valve according to Claim 1, characterised in that the valving element (12) is secured to a movable guide rod (6, 10) which is mounted in an axial slide bearing (4) and carries the movable part (14), the stationary part (13) being fixedly secured to the slide bearing (4).

4. The utilisation of a safety valve according to Claim 1, characterised in that it is provided on a pneumatic conveying line.

**Revendications**

1. Soupape de sûreté pour la protection de soufflantes, en particulier en relation avec des conduites et des récipients, par exemple conduits de transport pneumatique et similaires, avec un siège de soupape (3) et un élément mobile de soupape (12) à mouvement amorti et qui est pressé par un ressort hélicoïdal précontraint (16) contre le siège de soupape (3), le ressort hélicoïdal (16) étant précontraint entre deux pièces (13, 14) dont l'une est mobile avec l'élément mobile de soupape (12) et l'autre est en position·fixe, un corps creux (20) raidi en direction radiale s'étendant coaxialement au ressort hélicoïdal (16) et étant fixé de façon étanche à l'une de ses extrémités à l'une des pièces (13, 14), l'espace intérieur du corps creux (20) étant relié à l'atmosphère ambiante par un passage à air (24), caractérisée en ce que le corps creux (20) comporte un tuyau armé flexible en direction axiale et que le ressort hélicoïdal (16) est disposé à l'intérieur du tuyau flexible (20), en ce que le tuyau flexible (20 est fixé à son autre extrémité à l'autre pièce (13, 14) et en ce que le passage à air (24) est dimensioné de sorte qu'un équilibrage de pression ne s'établisse que peu à peu entre l'espace intérieur du tuyau flexible (20) et l'atmosphère ambiante.

2. Soupape de sûreté selon la revendication 1, caractérisée en ce que l'élément mobile de soupape (12) est monté de façon à pouvoir coulisser axialement sur une tige de guidage (6, 10) fixe, et en ce que la pièce fixe (14) est fixée à la tige de guidage.

3. Soupape de sûreté selon la revendication 1, caractérisée en ce que l'élément mobile de soupape (12) est fixé à une tige de guidage (6, 10) mobile montée dans un palier axial à coulisse (4), cette tige de guidage (6, 10) portant la pièce mobile (14), la pièce fixe (13) étant reliée de façon fixe avec le palier à coulisse (4).

4. Utilisation d'une soupape de sûreté selon la revendication 1, caractérisé en ce qu'elle est placée sur une conduite de transport pneumatique.

Fig.1

Fig. 2

Fig. 3

1/1